# EUROPEAN PATENT APPLICATION

(11) **EP 4 694 558 A1**
(43) Date of publication of application: **11.02.2026**
(21) Application number: 24784005.1
(22) Date of filing: 06.03.2024
(51) Int. Cl.: H04W 76/18

(54) **CONSISTENT LISTEN-BEFORE-TALK FAILURE PROCESSING METHOD AND APPARATUS, AND TERMINAL**

(30) Priority: 07.04.2023 CN 202310367579; 08.09.2023 CN 202311154711
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2024/080261
(87) International publication number: WO 2024/207920

(57) **Abstract**

The present disclosure provides a method, device and terminal for processing a consistent listen before talk failure, relating to the field of communication technologies. The method is performed by a terminal, and comprises: performing a first operation when a first resource block set of a sidelink interface experiences the consistent listen before talk failure, wherein the first operation comprises at least one of the following: if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set; triggering resource pool reselection; triggering a sidelink interface listen before talk failure media access control control element; triggering a sidelink interface radio link failure.

## Description

### CROSS-REFERENCE TO RELATED APPLICATION

This disclosure claims priorities of the Chinese Patent Application No. 202310367579.4 filed with the China Patent Office on April 7, 2023, entitled "METHOD, DEVICE AND TERMINAL FOR PROCESSING A CONSISTENT LISTEN BEFORE TALK FAILURE", and the Chinese Patent Application No. 202311154711.X filed with the China Patent Office on September 8, 2023, entitled "METHOD, DEVICE AND TERMINAL FOR PROCESSING A CONSISTENT LISTEN BEFORE TALK FAILURE", the entire contents of which are incorporated herein by reference.

### TECHNICAL FIELD

The present disclosure relates to the field of communication technologies, and in particular, to a method, device and terminal for processing a consistent listen before talk failure.

### BACKGROUND

A resource granularity of sidelink unlicensed (SL-U) Listen Before Talk (LBT) is a Resource Block Set (RB set). For a terminal of which a sidelink interface uses a terminal-selected resource allocation mode (mode 2), when the terminal experiences a consistent LBT failure on an RB set, how to process the consistent LBT failure is an urgent problem to be solved.

### SUMMARY

Embodiments of the present disclosure provide a method, device and terminal for processing a consistent listen before talk failure, so as to ensure that the terminal can smoothly send and receive data after the terminal experiences the consistent LBT failure on an RB set.

In order to solve the above technical problem, an embodiment of the present disclosure provides a method for processing a consistent listen before talk failure, performed by a terminal, comprising:
performing a first operation when a first resource block set of a sidelink interface experiences the consistent listen before talk failure;
wherein the first operation comprises at least one of the following:
   if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set;
   triggering resource pool reselection;
   triggering a sidelink interface listen before talk failure media access control control element;
   triggering a sidelink interface radio link failure.

In some embodiments, the selecting a second resource block set from the resource block sets that do not experience the consistent listen before talk failure comprises:
if the number of the resource block sets in the first resource pool that do not experience the consistent listen before talk failure is greater than 1, selecting a resource block set from the resource block sets in the first resource pool that do not experience the consistent listen before talk failure as the second resource block set according to a first manner;
wherein the first manner comprises one of the following:
   randomly selecting;
   selecting in an ascending or descending order according to a numbering order of the resource block sets;
   selecting in an ascending or descending order according to frequency domain positions and/or time domain positions of the resource block sets.

In some embodiments, when the first operation comprises if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set, the method further comprises:
when all resource block sets included in the first resource pool experience the consistent listen before talk failure or there is no resource block set in the first resource pool that does not experience the consistent listen before talk failure, performing at least one of the following:
triggering the resource pool reselection;
triggering the sidelink interface listen before talk failure media access control control element;
triggering the sidelink interface radio link failure.

In some embodiments, after triggering the resource pool reselection, the method further comprises:
selecting a resource block set from a reselected resource pool to perform the listen before talk failure recovery.

In some embodiments, the method further comprises:
performing at least one of the following if all resource block sets in a resource pool available to the terminal experience the consistent listen before talk failure:
triggering the sidelink interface listen before talk failure media access control control element;
triggering the sidelink interface radio link failure.

In some embodiments, when triggering the sidelink interface radio link failure, the method further comprises:
sending first indication information to a network device if the terminal is in a first state;
wherein the first state comprises one of the following:
   a Radio Resource Control (RRC) connected state;
   the RRC connected state and the sidelink interface uses a terminal-selected resource allocation mode;
   the RRC connected state and the sidelink interface uses a network-scheduled resource allocation mode;
   the first indication information comprises at least one of the following:
      a reason for the sidelink interface radio link failure;
      a L2 destination address corresponding to the sidelink interface radio link failure;
      a combination of a L2 source address and the L2 destination address corresponding to the sidelink interface radio link failure;
      a combination of the L2 source address, the L2 destination address, and a transmission mode corresponding to the sidelink interface radio link failure;
      information about the resource pool experiencing the listen before talk failure;
      information about the resource block set experiencing the listen before talk failure.

In some embodiments, the reason for the sidelink interface radio link failure comprises: the sidelink interface experiences the consistent listen before talk failure.

In some embodiments, the sidelink interface listen before talk failure media access control control element comprises at least one of the following:
information about the resource pool experiencing the consistent listen before talk failure;
information about the resource block set experiencing the consistent listen before talk failure.

In some embodiments, the method further comprises:
canceling the triggered sidelink interface listen before talk failure media access control control element when a first condition is met;
wherein the first condition comprises at least one of the following:
   a reconfiguration message for parameters related to sidelink interface listen before talk is received;
   the sidelink interface listen before talk failure media access control control element is sent;
   resource block set reselection is performed on the sidelink interface;
   resource pool reselection is performed on the sidelink interface.

In some embodiments, the method further comprises:
receiving configuration information;
determining, according to the configuration information, the first operation corresponding to the configuration information;
wherein the configuration information comprises at least one of the following:
   dedicated signaling received from a network device, wherein the dedicated signaling comprises: RRC signaling, media access control control element, or physical layer signaling;
   pre-configuration information;
   system information received from the network device.

In some embodiments, the method further comprises:
reporting capability information to a network device;
wherein the capability information comprises at least one of the following:
   whether the terminal supports sidelink interface listen before talk failure recovery;
   an operation mode supported by the terminal when performing the listen before talk failure recovery on the sidelink interface.

In some embodiments, the method further comprises:
determining the first operation according to configuration information;
wherein the configuration information is obtained in at least one of the following ways:
   obtained from system information received from a network device;
   obtained from radio resource control signaling received from the network device;
   obtained from a media access control control element received from the network device;
   obtained from physical layer signaling received from the network device;
   obtained from pre-configuration information;
   specified by a protocol.

An embodiment of the present disclosure further provides a terminal, comprising: a memory, a transceiver, and a processor:
wherein the memory is configured to store a computer program; the transceiver is configured to transmit and receive data under the control of the processor; and the processor is configured to read the computer program in the memory and perform following operations:
performing a first operation when a first resource block set of a sidelink interface experiences a consistent listen before talk failure;
wherein the first operation comprises at least one of the following:
   if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set;
   triggering resource pool reselection;
   triggering a sidelink interface listen before talk failure media access control control element;
   triggering a sidelink interface radio link failure.

In some embodiments, the processor is configured to read the computer program in the memory and perform following operations:
if the number of the resource block sets in the first resource pool that do not experience the consistent listen before talk failure is greater than 1, selecting a resource block set from the resource block sets in the first resource pool that do not experience the consistent listen before talk failure as the second resource block set according to a first manner;
wherein the first manner comprises one of the following:
   randomly selecting;
   selecting in an ascending or descending order according to a numbering order of the resource block sets;
   selecting in an ascending or descending order according to frequency domain positions and/or time domain positions of the resource block sets.

In some embodiments, when the first operation comprises if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set, the processor is configured to read the computer program in the memory and further perform following operations:
when all resource block sets included in the first resource pool experience the consistent listen before talk failure or there is no resource block set in the first resource pool that does not experience the consistent listen before talk failure, performing at least one of the following:
triggering the resource pool reselection;
triggering the sidelink interface listen before talk failure media access control control element;
triggering the sidelink interface radio link failure.

In some embodiments, the processor is configured to read the computer program in the memory and further perform following operations:
selecting a resource block set from a reselected resource pool to perform the listen before talk failure recovery.

In some embodiments, the processor is configured to read the computer program in the memory and further perform following operations:
performing at least one of the following if all resource block sets in a resource pool available to the terminal experience the consistent listen before talk failure:
triggering the sidelink interface listen before talk failure media access control control element;
triggering the sidelink interface radio link failure.

In some embodiments, when triggering the sidelink interface radio link failure, the processor is configured to read the computer program in the memory and further perform following operations:
sending first indication information to a network device if the terminal is in a first state;
wherein the first state comprises one of the following:
   a Radio Resource Control (RRC) connected state;
   the RRC connected state and the sidelink interface uses a terminal-selected resource allocation mode;
   the RRC connected state and the sidelink interface uses a network-scheduled resource allocation mode;
   the first indication information comprises at least one of the following:
      a reason for the sidelink interface radio link failure;
      a L2 destination address corresponding to the sidelink interface radio link failure;
      a combination of a L2 source address and the L2 destination address corresponding to the sidelink interface radio link failure;
      a combination of the L2 source address, the L2 destination address, and a transmission mode corresponding to the sidelink interface radio link failure;
      information about the resource pool experiencing the listen before talk failure;
      information about the resource block set experiencing the listen before talk failure.

In some embodiments, the reason for the sidelink interface radio link failure comprises: the sidelink interface experiences the consistent listen before talk failure.

In some embodiments, the sidelink interface listen before talk failure media access control control element comprises at least one of the following:
information about the resource pool experiencing the consistent listen before talk failure;
information about the resource block set experiencing the consistent listen before talk failure.

In some embodiments, the processor is configured to read the computer program in the memory and further perform following operations:
canceling the triggered sidelink interface listen before talk failure media access control control element when a first condition is met;
wherein the first condition comprises at least one of the following:
   a reconfiguration message for parameters related to sidelink interface listen before talk is received;
   the sidelink interface listen before talk failure media access control control element is sent;
   resource block set reselection is performed on the sidelink interface;
   resource pool reselection is performed on the sidelink interface.

In some embodiments, the processor is configured to read the computer program in the memory and further perform following operations:
receiving configuration information;
determining, according to the configuration information, the first operation corresponding to the configuration information;
wherein the configuration information comprises at least one of the following:
   dedicated signaling received from a network device, wherein the dedicated signaling comprises: RRC signaling, media access control control element, or physical layer signaling;
   pre-configuration information;
   system information received from the network device.

In some embodiments, the processor is configured to read the computer program in the memory and further perform following operations:
reporting capability information to a network device;
wherein the capability information comprises at least one of the following:
   whether the terminal supports sidelink interface listen before talk failure recovery;
   an operation mode supported by the terminal when performing the listen before talk failure recovery on the sidelink interface.

In some embodiments, the processor is configured to read the computer program in the memory and further perform following operations:
determining the first operation according to configuration information;
wherein the configuration information is obtained in at least one of the following ways:
   obtained from system information received from a network device;
   obtained from radio resource control signaling received from the network device;
   obtained from a media access control control element received from the network device;
   obtained from physical layer signaling received from the network device;
   obtained from pre-configuration information;
   specified by a protocol.

An embodiment of the present disclosure further provides a device for processing a consistent listen before talk failure, applied to a terminal, comprising:
a first performing unit, configured to perform a first operation when a first resource block set of a sidelink interface experiences the consistent listen before talk failure;
wherein the first operation comprises at least one of the following:
   if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set;
   triggering resource pool reselection;
   triggering a sidelink interface listen before talk failure media access control control element;
   triggering a sidelink interface radio link failure.

An embodiment of the present disclosure further provides a processor-readable storage medium, storing a computer program, wherein the computer program is configured to cause a processor to execute the above method.

The beneficial effects of the present disclosure are as follows.

In above solution, operations that a terminal needs to perform when a resource block set of a sidelink interface experiences a consistent listen before talk failure are specified, so that the terminal can perform appropriate processing when the resource block set experiences the consistent listen before talk failure, ensuring that the terminal can smoothly send and receive data.

### BRIEF DESCRIPTION OF THE DRAWINGS

FIG. 1 is a structural diagram of a network system applicable to embodiments of the present disclosure;
FIG. 2 is a flowchart showing a method for processing a consistent listen before talk failure according to an embodiment of the present disclosure;
FIG. 3 is a schematic diagram showing a specific process of application scenario 1 of an embodiment of the present disclosure;
FIG. 4 is a schematic diagram showing a specific process of application scenario 2 of an embodiment of the present disclosure;
FIG. 5 is a schematic diagram showing a specific process of application scenario 3 of an embodiment of the present disclosure;
FIG. 6 is a schematic diagram showing units of a device for processing a consistent listen before talk failure according to an embodiment of the present disclosure;
FIG. 7 shows a structural diagram of a terminal according to an embodiment of the present disclosure.

### DETAILED DESCRIPTION

The technical solutions in embodiments of the present disclosure will be clearly and completely described below in conjunction with the drawings in the embodiments of the present disclosure. Obviously, the described embodiments are only part of the embodiments of the present disclosure, rather than all the embodiments. Based on the embodiments of the present disclosure, all other embodiments obtained by those skilled in the art without creative work shall fall within the scope of protection of the present disclosure.

The terms "first", "second", and the like in the description and claims of the present disclosure are used to distinguish similar objects but not necessarily to describe a particular sequence or order. It is to be understood that the terms so used are interchangeable under appropriate circumstances such that the embodiments of the disclosure described herein may be practiced in sequences other than those illustrated or described herein. In addition, the terms "comprise" and "have" and any variations thereof are intended to cover a non-exclusive inclusion. For example, a process, method, system, product or device that includes a series of steps or elements is not necessarily limited to those steps or elements expressly listed but may include other steps or elements not expressly listed or inherent to such process, method, product or device.

In the embodiments of the present disclosure, the term "and/or" describes an association relationship of associated objects, indicating that three relationships may exist. For example, A and/or B may represent three situations: A exists alone, A and B exist at the same time, and B exists alone. The character "j" generally indicates that the previous and next associated objects are in an "or" relationship. In the embodiments of the present disclosure, the term "multiple (a plurality of)" refers to two or more than two, and other quantifiers are similar thereto.

In the embodiments of the present disclosure, words such as "exemplary" or "for example" are used to indicate examples, instances or illustrations. Any embodiment or design described as "exemplary" or "for example" in the embodiments of the present disclosure should not be construed as preferred or advantageous over other embodiments or designs. Rather, the use of words such as "exemplary" or "for example" are intended to present relevant concepts in a concrete fashion.

The relevant concepts mentioned in this disclosure are briefly described below.

Traditional radio communications use cellular network communications, where terminals and network devices transmit uplink and downlink data/control information via an Uu interface.

Direct communication refers to a method in which adjacent terminals may transmit data over a short distance via a direct communication link (also called sidelink or PC5 link, SL for short). A radio interface corresponding to sidelink is called a direct communication interface (also called a sidelink interface or a PC5 interface).

For shared spectrum (also called unlicensed spectrum), a terminal transmitter needs to monitor a control channel before sending data, that is, needs to support the Listen Before Talk (LBT) mechanism. The purpose of introducing the LBT mechanism is to minimize conflicts when different terminals use shared spectrum.

LBT is performed by a physical layer of the terminal. If the terminal monitors that the channel is occupied, the terminal may not send data. If the physical layer of the terminal performs LBT before data transmission and the LBT process finds that the channel is occupied such that transmission may not be performed, the physical layer may indicate a listen before talk failure (LBT failure) to the medium access control (MAC) layer.

The MAC layer maintains a timer (lbt-FailureDetectionTimer) and a counter (LBT_COUNTER), and an initial value of the counter is 0. Whenever the MAC layer receives an LBT failure indication from the physical layer, the MAC layer restarts the timer and the value of the counter increases by 1. If the counter LBT_COUNTER reaches a preset maximum value during the operation of the timer lbt-FailureDetectionTimer, the MAC layer determines that a consistent LBT failure (called consistent LBT failure in the protocol professional terminology) has occurred.

The following describes embodiments of the present disclosure in conjunction with accompanying drawings. The method, device and terminal for processing a consistent listen before talk failure provided by the embodiments of the present disclosure may be applied to a radio communication system. The radio communication system may be a system using 5^{th} generation (5G) mobile communication technology (hereinafter referred to as a 5G system). Those skilled in the art may understand that the 5G NR system is only an example and not a limitation.

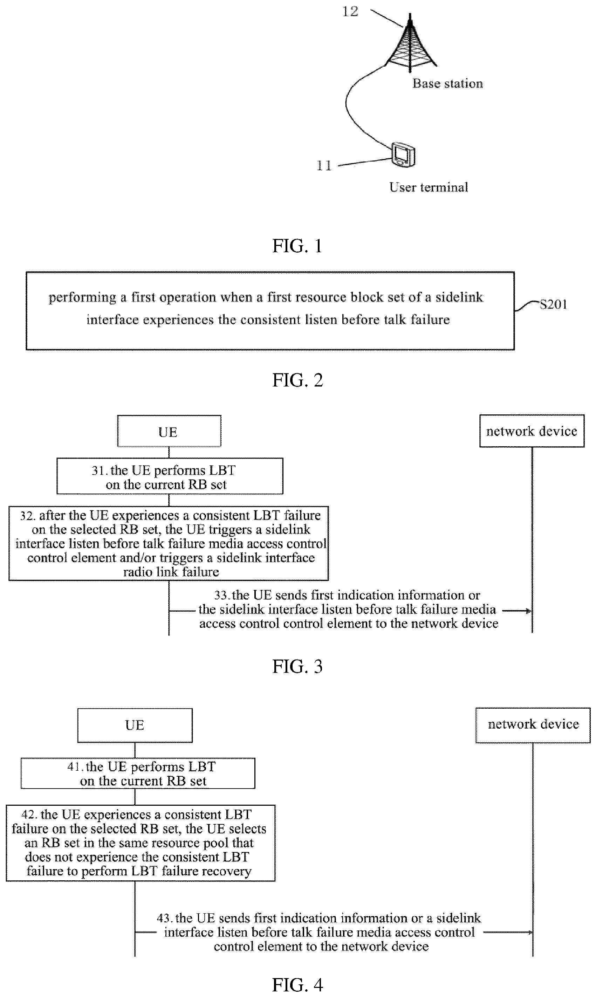

Referring to FIG. 1, FIG. 1 is a structural diagram of a network system applicable to embodiments of the present disclosure. As shown in FIG. 1, it includes a user terminal 11 and a base station 12, where the user terminal 11 may be a user equipment (UE), for example, may be a terminal-side device such as a mobile phone, a tablet personal computer, a laptop computer, a personal digital assistant (PDA), a mobile Internet device (MID) or a wearable device. It should be noted that the specific type of the user terminal 11 is not limited in the embodiment of the present disclosure. The above-mentioned base station 12 may be a base station of 5G and later versions (for example: gNB, 5G NR NB), or a base station in other communication systems, or referred to as a node B. It should be noted that in the embodiments of this disclosure, only a 5G base station is taken as an example, but the specific type of the base station 12 is not limited.

Embodiments of the present disclosure provide a method, device and terminal for processing a consistent listen before talk failure, so as to ensure that the terminal can smoothly send and receive data after the terminal experiences the consistent LBT failure on an RB set.

The method and the device are based on the same application concept. Since the principles of solving problems by the method and the device are similar, the implementation of the device and the method may refer to each other, and the repeated parts will not be repeated.

As shown in FIG. 2, an embodiment of the present disclosure provides a method for processing a consistent listen before talk failure, performed by a terminal, including:
Step S201, performing a first operation when a first resource block set of a sidelink interface experiences the consistent listen before talk failure;
specifically, the first operation includes at least one of the following:
   A11, if there are resource block sets (RB set) in a first resource pool to which the first resource block set belongs that do not experience the consistent listen before talk failure, selecting a second resource block set from the resource block sets that do not experience the consistent listen before talk failure, and performing listen before talk failure recovery (LBT failure recovery) on the second resource block set.

It should be noted that in this case, as long as the terminal experiences the consistent listen before talk failure on the first resource block set, if there is a resource block set in the first resource pool to which the first resource block set belongs that does not experience the consistent listen before talk failure, a second resource block set may be selected preferably from the resource block set that does not experience the consistent listen before talk failure to perform listen before talk failure recovery. In some embodiments, the listen before talk failure recovery may also be called consistent listen before talk failure recovery.

In some embodiments, the selecting a second resource block set from the resource block sets that do not experience the consistent listen before talk failure includes:
if the number of the resource block sets in the first resource pool that do not experience the consistent listen before talk failure is greater than 1, selecting a resource block set from the resource block sets in the first resource pool that do not experience the consistent listen before talk failure as the second resource block set according to a first manner;
specifically, the first manner includes one of the following:
   A111, randomly selecting;
      This manner is to randomly select a resource block set from the resource block sets that do not experience the consistent listen before talk failure as the second resource block set to perform listen before talk failure recovery.
   A112, selecting in an ascending or descending order according to a numbering order of the resource block sets;
      This manner is to select a resource block set from the resource block sets that do not experience the consistent listen before talk failure in an ascending or descending order according to a numbering order of the resource block sets as the second resource block set to perform listen before talk failure recovery; for example, a resource block set with the maximum or minimum number may be selected.
   A113, selecting in an ascending or descending order according to frequency domain positions and/or time domain positions of the resource block sets;

This manner is to select a resource block set from the resource block sets that do not experience the consistent listen before talk failure in an ascending or descending order according to frequency domain positions and/or time domain positions of the resource block sets as the second resource block set to perform listen before talk failure recovery; for example, a resource block set with the maximum or minimum frequency domain position ranking may be selected; or, for example, a resource block set with the maximum or minimum time domain position ranking may be selected.

In some embodiments, when the first operation includes if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set, the method in the embodiment of the present disclosure may further include:
when all resource block sets included in the first resource pool experience the consistent listen before talk failure or there is no resource block set in the first resource pool that does not experience the consistent listen before talk failure, performing at least one of the following:
A1101, triggering the resource pool reselection;
   It should be noted that if there is a resource block set in the first resource pool that does not experience the consistent listen before talk failure, the terminal may use the resource block set that does not experience the consistent listen before talk failure to perform listen before talk failure recovery; if the terminal fails to successfully perform the listen before talk failure recovery on all resource block sets in the first resource pool, the terminal needs to trigger resource pool reselection; if there is no resource block set in the first resource pool that does not experience the consistent listen before talk failure, the terminal directly triggers resource pool reselection. In some embodiments, triggering the resource pool reselection may be understood as: after triggering resource pool reselection, the terminal needs to select other resource pools except the first resource pool to which the first resource block set belongs, select a resource block set from the selected resource pool, and perform listen before talk failure recovery on the resource block set.
A1102, triggering the sidelink interface listen before talk failure media access control (LBT failure MAC) control element (CE).
   It should be noted that if there is a resource block set in the first resource pool that does not experience the consistent listen before talk failure, the terminal may use the resource block set that does not experience the consistent listen before talk failure to perform listen before talk failure recovery; if the terminal fails to successfully perform the listen before talk failure recovery on all resource block sets in the first resource pool, the terminal needs to trigger the sidelink interface listen before talk failure media access control control element; if there is no resource block set in the first resource pool that does not experience the consistent listen before talk failure, the terminal directly triggers the sidelink interface listen before talk failure media access control control element. In some embodiments, triggering the sidelink interface listen before talk failure media access control control element may be understood as: the terminal determines that the sidelink interface listen before talk failure media access control control element needs to be sent. In some embodiments, if the terminal is in a radio resource control (RRC) connected state, when the Uu interface meets certain conditions (for example, there are uplink resources and the uplink resources may carry the sidelink interface listen before talk failure media access control control element), the terminal may report the sidelink interface listen before talk failure media access control control element to the network device through the uplink resources.
A1103, triggering the sidelink interface radio link failure (RLF);
   It should be noted that if there is a resource block set in the first resource pool that does not experience the consistent listen before talk failure, the terminal may use the resource block set that does not experience the consistent listen before talk failure to perform listen before talk failure recovery; if the terminal fails to successfully perform the listen before talk failure recovery on all resource block sets in the first resource pool, the terminal needs to trigger the sidelink interface radio link failure; if there is no resource block set in the first resource pool that does not experience the consistent listen before talk failure, the terminal directly triggers the sidelink interface radio link failure. In some embodiments, the terminal triggering the sidelink interface radio link failure may be understood as: the terminal determines the sidelink interface radio link. In some embodiments, if the terminal is in an RRC connected state, when the Uu interface meets certain conditions (for example, there are uplink resources and the uplink resources may carry a message of the sidelink interface radio link failure), the terminal may report the sidelink interface radio link failure to the network device through the uplink resources. Specifically, the message carrying the sidelink interface radio link failure may reuse a SidelinkUEInformation message or other newly introduced messages.

A12, triggering resource pool reselection;
**It** should be noted that in this case, it may be understood that as long as the consistent listen before talk failure occurs on the first resource block set, the terminal may trigger the resource pool reselection, that is, select other resource pools except the first resource pool to which the first resource block set belongs, select a resource block set from the selected resource pool, and perform listen before talk failure recovery on the resource block set.

**In** some embodiments, in this case, after triggering the resource pool reselection, the method further includes:
selecting a resource block set from a reselected resource pool to perform the listen before talk failure recovery.

A13, triggering the sidelink interface listen before talk failure media access control control element;
**It** should be noted that in this case, it may be understood that as long as the consistent listen before talk failure occurs on the first resource block set, the terminal triggers the sidelink interface listen before talk failure media access control control element. In some embodiments, if the terminal is in an RRC connected state, when the Uu interface meets certain conditions (for example, there are uplink resources and the uplink resources may carry the sidelink interface listen before talk failure media access control control element), the terminal may report the sidelink interface listen before talk failure media access control control element to the network device through the uplink resources.

A14, triggering the sidelink interface radio link failure;
**It** should be noted that in this case, it may be understood that as long as the consistent listen before talk failure occurs on the first resource block set, the terminal triggers the sidelink interface radio link failure. In some embodiments, if the terminal is in an RRC connected state, when the Uu interface meets certain conditions (for example, there are uplink resources and the uplink resources may carry a message of the sidelink interface radio link failure), the terminal may report the sidelink interface radio link failure to the network device through the uplink resources. Specifically, the message carrying the sidelink interface radio link failure may reuse the existing SidelinkUEInformation message or other newly introduced messages.

**In** some embodiments, if resource pool reselection is triggered when the terminal executes the above step A11 or the terminal executes step A12, the method may further include:
performing at least one of the following if all resource block sets in a resource pool available to the terminal experience the consistent listen before talk failure:
B11, triggering the sidelink interface listen before talk failure media access control control element;
   This situation may be understood as: as long as all resource block sets in a resource pool available to the terminal experience the consistent listen before talk failure, the terminal may trigger the sidelink interface listen before talk failure media access control control element. In some embodiments, if the terminal is in an RRC connected state, when the Uu interface meets certain conditions (for example, there are uplink resources and the uplink resources may carry the sidelink interface listen before talk failure media access control control element), the terminal may report the sidelink interface listen before talk failure media access control control element to the network device through the uplink resources.
B12, triggering the sidelink interface radio link failure;
   **In** this case, it may be understood as: as long as all resource block sets in a resource pool available to the terminal experience the consistent listen before talk failure, the terminal triggers the sidelink interface radio link failure. In some embodiments, if the terminal is in an RRC connected state, when the Uu interface meets certain conditions (for example, there are uplink resources and the uplink resources may carry a message of the sidelink interface radio link failure), the terminal may report the sidelink interface radio link failure to the network device through the uplink resources. Specifically, the message carrying the sidelink interface radio link failure may reuse the existing SidelinkUEInformation message or other newly introduced messages.

This situation may be understood as: when the terminal uses the available resource block set in the available resource pool in sequence to perform listen before talk failure recovery, and fails to successfully perform listen before talk failure recovery, the terminal may trigger B11 and/or B12.

In some embodiments, when triggering the sidelink interface radio link failure, the method further includes:
sending first indication information to a network device if the terminal is in a first state;
where the first state includes one of the following:
   C11, a radio resource control (RRC) connected state;
   C12: the RRC connected state and the sidelink interface uses a terminal-selected resource allocation mode (i.e., mode 2);
   C13: the RRC connected state and the sidelink interface uses a network-scheduled resource allocation mode (i.e., mode 1).

In some embodiments, the first indication information includes at least one of the following:
C21, a reason for the sidelink interface radio link failure;
   In some embodiments, the reason for the sidelink interface radio link failure includes: the sidelink interface experiences the consistent listen before talk failure.
C22, a L2 destination address corresponding to the sidelink interface radio link failure;
C23, a combination of a L2 source address and the L2 destination address corresponding to the sidelink interface radio link failure;
C24, a combination of the L2 source address, the L2 destination address, and a transmission mode corresponding to the sidelink interface radio link failure;
   In some embodiments, the transmission mode includes at least one of the following: unicast, multicast, and broadcast.
C25, information about the resource pool experiencing the listen before talk failure;
   It should be noted that the information about the resource pool experiencing the listen before talk failure includes at least one of the following: information about the resource pool experiencing the sidelink interface consistent listen before talk failure, and information about the resource pool experiencing the sidelink interface listen before talk failure. In some embodiments, the information about the resource pool may be a number or index of the resource pool. In some embodiments, the resource pool may be one or more resource pools.
C26, information about the resource block set experiencing the listen before talk failure;

It should be noted that the information about the resource block set experiencing the listen before talk failure includes at least one of the following: information about the resource block set experiencing the sidelink interface consistent listen before talk failure, and information about the resource block set experiencing the sidelink interface listen before talk failure. In some embodiments, the information about the resource block set may be a number or index of the resource block set. In some embodiments, the resource block set may be one or more resource block sets.

In some embodiments, the first indication information is carried through an RRC message, for example, through a SidelinkUEInformation message; or, for example, through a newly introduced RRC message.

In some embodiments, the sidelink interface listen before talk failure media access control control element includes at least one of the following:
D11, information about the resource pool experiencing the consistent listen before talk failure;
   In some embodiments, the information about the resource pool may be a number or index of the resource pool. The resource pool may be one or more resource pools.
D12, information about the resource block set experiencing the consistent listen before talk failure;
In some embodiments, the information about the resource block set may be a number or index of the resource block set. The resource block set may be one or more resource block sets.

In some embodiments, the sidelink interface listen before talk failure media access control control element may be carried by a media access control protocol data unit (MAC PDU).

In some embodiments, in the embodiment of the present disclosure, when triggering the sidelink interface listen before talk failure media access control control element, the method further includes:
canceling the triggered sidelink interface listen before talk failure media access control control element when a first condition is met;
where the first condition includes at least one of the following:
   E11, a reconfiguration message for parameters related to sidelink interface listen before talk is received;
      This situation may be understood as: when the terminal triggers the listen before talk failure media access control control element, if the terminal receives a reconfiguration message for parameters related to sidelink interface listen before talk, the terminal cancels the triggered listen before talk media access control control element. In some embodiments, if the sidelink interface listen before talk media access control control element has been generated, it may be directly discarded.
   E12, the sidelink interface listen before talk failure media access control control element is sent;
      This situation may be understood as: after the sidelink interface listen before talk failure media access control control element is triggered, the terminal needs to cancel the triggered sidelink interface listen before talk failure media access control control element after sending the sidelink interface listen before talk failure media access control control element.
   E13, resource block set reselection is performed on the sidelink interface;
      This situation may be understood as: after triggering the sidelink interface listen before talk failure media access control control element, if the terminal performs resource block set reselection on the sidelink interface, the terminal cancels the triggered sidelink interface listen before talk failure media access control control element. In some embodiments, if the sidelink interface listen before talk media access control control element has been generated, it may be directly discarded.
   E14, resource pool reselection is performed on the sidelink interface;
      This situation may be understood as: after triggering the sidelink interface listen before talk failure media access control control element, if the terminal performs resource block pool reselection on the sidelink interface, the terminal cancels the triggered sidelink interface listen before talk failure media access control control element. In some embodiments, if the sidelink interface listen before talk media access control control element has been generated, it may be directly discarded.

**In** some embodiments, the method of the present disclosure further includes:
receiving configuration information; and determining, according to the configuration information, the first operation corresponding to the configuration information;
That is to say, in this case, what operation the terminal needs to perform when the first resource block set of the sidelink interface experiences the consistent listen before talk failure is configured by the network device, that is, the network device needs to configure in advance the operations (i.e., one or more of A11-A14) that the terminal needs to perform when the first resource block set of the sidelink interface experiences the consistent listen before talk failure. When the first resource block set of the sidelink interface experiences the consistent listen before talk failure, the terminal only needs to perform the corresponding operations according to the configuration of the network device, so as to ensure that the terminal and the network side have a consistent understanding for the operations.

The configuration information includes at least one of the following:
F11, dedicated signaling received from a network device, where the dedicated signaling includes: RRC signaling, media access control control element, or physical layer signaling;
F12, pre-configuration information;
F13, system information received from the network device.

**In** some embodiments, the method of the present disclosure further includes:
reporting capability information to a network device;
where the capability information includes at least one of the following:
   H11, whether the terminal supports sidelink interface listen before talk failure recovery;
   H12, an operation mode supported by the terminal when performing the listen before talk failure recovery on the sidelink interface.

It should be noted that in this case, the terminal needs to report its capabilities to the network device. The network device may send appropriate configuration information to the terminal based on the capabilities reported by the terminal, so that the terminal may determine what operations need to be performed when the first resource block set of the sidelink interface experiences the consistent listen before talk failure.

In some embodiments, in an implementation, the method further includes:
determining the first operation according to configuration information.

It should be noted that before the first operation is performed, it is necessary to determine firstly the specific contents of the first operation to be performed by the terminal. That is, the terminal needs to determine firstly which one or more of A11-A14 to be performed according to the configuration information. Normally, the terminal may only perform one of A11-A14 at one moment.

In some embodiments, the configuration information is obtained in at least one of the following ways:
J11, obtained from system information received from a network device;
   This situation may be understood as: the terminal needs to obtain the first operation to be performed by the terminal from the system information. For example, the system information carries an indication field, where the indication field is used to indicate the first operation to be performed by the terminal. For example, the indication field may indicate that the first operation to be performed by the terminal is A11.
J12, obtained from radio resource control signaling received from the network device;
   This situation may be understood as: the terminal needs to obtain the first operation to be performed by the terminal from the radio resource control signaling. For example, the radio resource control signaling carries an indication field, where the indication field is used to indicate the first operation to be performed by the terminal. For example, the indication field is used to indicate that the first operation to be performed by the terminal is A13.
J13, obtained from a media access control control element received from the network device;
   This situation may be understood as: the terminal needs to obtain the first operation to be performed by the terminal from the radio resource control signaling. For example, the radio resource control signaling carries an indication field, where the indication field is used to indicate the first operation to be performed by the terminal. For example, the indication field is used to indicate that the first operation to be performed by the terminal is A14.
J14, obtained from physical layer signaling received from the network device;
   This situation may be understood as: the terminal needs to obtain the first operation to be performed by the terminal from the physical layer signaling. For example, the physical layer signaling carries an indication field, where the indication field is used to indicate the first operation to be performed by the terminal. For example, the indication field is used to indicate that the first operation to be performed by the terminal is A12.
J15, obtained from pre-configuration information;
   This situation may be understood as: the terminal needs to obtain the first operation to be performed by the terminal from the pre-configuration information. For example, the pre-configuration information carries an indication field, where the indication field is used to indicate the first operation to be performed by the terminal. For example, the indication field is used to indicate that the first operation to be performed by the terminal is A11.
J16, specified by a protocol;
   This situation may be understood as: the first operation is specified by the protocol. For example, in some embodiments, the protocol specifies that the first operation to be performed by the terminal is A12. The terminal may then directly learn that the specific first operation to be performed is to trigger resource pool reselection, and then directly perform triggering resource pool reselection when performing conditions are met.

The specific application of the embodiments of the present disclosure is described below with examples.

Application scenario 1: a consistent LBT failure occurs on an RB set currently selected by the terminal, the terminal does not perform a recovery process and directly triggers SL RLF or reports to the network device.

As shown in FIG. 3, the specific implementation process includes:
Step 31: the UE performs LBT on the current RB set.

If the terminal has data to send, it first performs a resource pool selection process and then performs resource selection on the selected resource pool. After the resource selection is completed, a transport block (TB) corresponding to physical sidelink shared channel (PSSCH) transmission is generated, and LBT is performed on the PSSCH transmission.

LBT is performed by the physical layer of the UE. If the UE monitors that the channel is not occupied, it sends data. If the UE monitors that the channel is occupied, it does not send data. At the same time, the physical layer may indicate an LBT failure to the MAC layer.

The MAC layer maintains a timer (lbt-FailureDetectionTimer) and a counter (LBT_COUNTER), and an initial value of the counter is 0. Whenever the MAC layer receives an LBT failure indication from the physical layer, the MAC layer restarts the timer and the value of the counter increases by 1. If the counter LBT_COUNTER reaches a preset maximum value during the operation of the timer lbt-FailureDetectionTimer, the MAC layer determines that a consistent LBT failure has occurred.

Step 32: after the UE experiences a consistent LBT failure on the selected RB set, the UE triggers a sidelink interface listen before talk failure media access control control element and/or triggers a sidelink interface radio link failure.

In some embodiments, when triggering the sidelink interface listen before talk failure media access control control element, the triggered sidelink interface listen before talk failure media access control control element is canceled if at least one of the following conditions is met:
a reconfiguration message for parameters related to sidelink interface listen before talk is received;
the sidelink interface listen before talk failure media access control control element is sent;
resource block set reselection is performed on the sidelink interface;
resource pool reselection is performed on the sidelink interface.

Step 33: the UE sends first indication information or the sidelink interface listen before talk failure media access control control element to the network device.

It should be noted that step 33 is performed only when the UE is in an RRC connected state, the UE is in an RRC connected state and uses a terminal-selected resource allocation mode (mode 2), or the UE is in an RRC connected state and uses a network-scheduled resource allocation mode (mode 1).

When SL RLF is triggered, if the terminal is in an RRC connected state, the terminal is in an RRC connected state and the sidelink interface uses a terminal-selected resource allocation mode, or the terminal is in an RRC connected state and the sidelink interface uses a network-scheduled resource allocation mode, the terminal sends first indication information to the network device. The first indication information includes at least one of the following information:
a reason for the sidelink interface radio link failure;
a L2 destination address corresponding to the sidelink interface radio link failure;
a combination of a L2 source address and the L2 destination address corresponding to the sidelink interface radio link failure;
information about the resource pool experiencing the listen before talk failure (may include information about one or more resource pools);
information about the RB set experiencing the listen before talk failure (may include information about one or more RB sets).

If the terminal sends the SL LBT failure MAC CE to the network device, the SL LBT failure MAC CE includes at least one of the following:
information about the resource pool experiencing the consistent LBT failure (may include information about one or more resource pools);
information about the RB set experiencing the consistent LBT failure (may include information about one or more RB sets).

If the SL RLF is triggered in step 32, the terminal sends first indication information to the network device. The first indication information may be carried by an existing RRC message (e.g., a SidelinkUEInformation message) or by a newly introduced RRC message.

If the sidelink interface listen before talk failure media access control control element is triggered in step 32, the sidelink interface listen before talk failure media access control control element may be carried by a MAC PDU.

Application scenario 2: a consistent LBT failure occurs on an RB set currently selected by the terminal, and the recovery process is performed only within the same resource pool.

As shown in FIG. 4, the specific implementation process includes:
Step 41: the UE performs LBT on the current RB set.

If the terminal has data to send, it first performs a resource pool selection process and then performs resource selection on the selected resource pool. After the resource selection is completed, a TB corresponding to PSSCH transmission is generated, and LBT is performed on the PSSCH transmission.

LBT is performed by the physical layer of the UE. If the UE monitors that the channel is occupied, it does not send data. If the UE monitors that the channel is occupied, it does not send data. At the same time, the physical layer may indicate an LBT failure to the MAC layer.

The MAC layer maintains a timer (lbt-FailureDetectionTimer) and a counter (LBT_COUNTER), and an initial value of the counter is 0. Whenever the MAC layer receives an LBT failure indication from the physical layer, the MAC layer restarts the timer and the value of the counter increases by 1. If the counter LBT_COUNTER reaches a preset maximum value during the operation of the timer lbt-FailureDetectionTimer, the MAC layer determines that a consistent LBT failure has occurred.

Step 42: the UE experiences a consistent LBT failure on the selected RB set, the UE selects an RB set in the same resource pool that does not experience the consistent LBT failure to perform LBT failure recovery.

If LBT succeeds on the newly selected RB set, the RB set may be used for data transmission; if it fails, RB set reselection is performed again in the same resource pool until LBT succeeds or the consistent LBT failure occurs on all RB sets in the resource pool.

If the consistent LBT failure occurs on all RB sets in the resource pool selected by the terminal, the terminal performs at least one of the following processing methods:
triggering the sidelink listen before talk failure media access control control element;
triggering the SL RLF.

In some embodiments, when triggering the sidelink interface listen before talk failure media access control control element, the triggered sidelink interface listen before talk failure media access control control element is canceled if at least one of the following conditions is met:
a reconfiguration message for parameters related to sidelink interface listen before talk is received;
the sidelink interface listen before talk failure media access control control element is sent;
resource block set reselection is performed on the sidelink interface;
resource pool reselection is performed on the sidelink interface.

Step 43: the UE sends first indication information or a sidelink interface listen before talk failure media access control control element to the network device.

It should be noted that step 43 is performed only when the UE is in an RRC connected state, the UE is in an RRC connected state and uses a terminal-selected resource allocation mode (mode 2), or the UE is in an RRC connected state and uses a network-scheduled resource allocation mode (mode 1).

When SL RLF is triggered, if the terminal is in an RRC connected state, the terminal is in an RRC connected state and the sidelink interface uses a terminal-selected resource allocation mode, or the terminal is in an RRC connected state and the sidelink interface uses a network-scheduled resource allocation mode, the terminal sends first indication information to the network device. The first indication information includes at least one of the following information:
a reason for the sidelink interface radio link failure;
a L2 destination address corresponding to the sidelink interface radio link failure;
a combination of a L2 source address and the L2 destination address corresponding to the sidelink interface radio link failure;
information about the resource pool experiencing the listen before talk failure (may include information about one or more resource pools);
information about the RB set experiencing the listen before talk failure (may include information about one or more RB sets).

If the terminal sends the sidelink interface listen before talk failure media access control control element to the network device, the sidelink interface listen before talk failure media access control control element includes at least one of the following:
information about the resource pool experiencing the consistent LBT failure (may include information about one or more resource pools);
information about the RB set experiencing the consistent LBT failure (may include information about one or more RB sets).

If the SL RLF is triggered in step 42, the terminal sends first indication information to the network device. The first indication information may be carried by an existing RRC message (e.g., a SidelinkUEInformation message) or by a newly introduced RRC message.

If the sidelink interface listen before talk failure media access control control element is triggered in step 42, the sidelink interface listen before talk failure media access control control element may be carried by a MAC PDU.

Application scenario 3: a consistent LBT failure occurs on an RB set currently selected by the terminal, and it is allowed to switch resource pool to perform the recovery process.

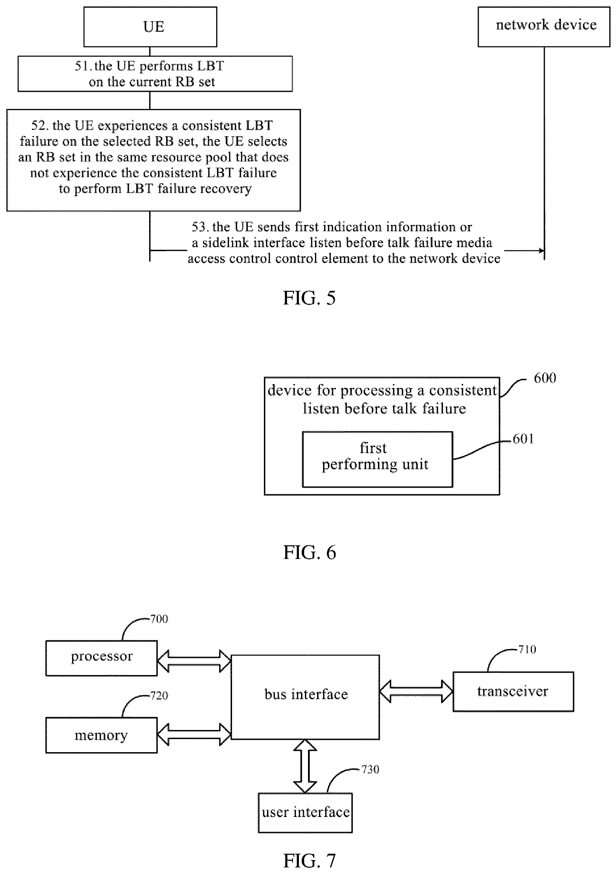

As shown in FIG. 5, the specific implementation process includes:
Step 51: the UE performs LBT on the current RB set.

If the terminal has data to send, it first performs a resource pool selection process and then performs resource selection on the selected resource pool. After the resource selection is completed, a TB corresponding to PSSCH transmission is generated, and LBT is performed on the PSSCH transmission.

LBT is performed by the physical layer of the UE. If the UE monitors that the channel is occupied, it does not send data. If the UE monitors that the channel is occupied, it does not send data. At the same time, the physical layer may indicate an LBT failure to the MAC layer.

The MAC layer maintains a timer (lbt-FailureDetectionTimer) and a counter (LBT_COUNTER), and an initial value of the counter is 0. Whenever the MAC layer receives an LBT failure indication from the physical layer, the MAC layer restarts the timer and the value of the counter increases by 1. If the counter LBT_COUNTER reaches a preset maximum value during the operation of the timer lbt-FailureDetectionTimer, the MAC layer determines that a consistent LBT failure has occurred.

Step 52: the UE experiences a consistent LBT failure on the selected RB set, the UE selects an RB set in the same resource pool that does not experience the consistent LBT failure to perform LBT failure recovery.

If LBT succeeds on the newly selected RB set, the RB set may be used for data transmission; if it fails, RB set reselection is performed again in the same resource pool until LBT succeeds or the consistent LBT failure occurs on all RB sets in the resource pool.

If the consistent LBT failure occurs on all RB sets in the resource pool selected by the terminal, the terminal is triggered to perform resource pool reselection and then select a new resource pool for LBT failure recovery. The process of performing LBT failure recovery in the newly selected resource pool is exactly the same as the process of performing LBT failure recovery in the original resource pool described in step 52.

If the consistent LBT failure occurs on all RB sets of all resource pools available to the terminal, the terminal performs at least one of the following processing methods:
triggering the sidelink listen before talk failure media access control control element;
triggering the SL RLF.

In some embodiments, when triggering the sidelink interface listen before talk failure media access control control element, the triggered sidelink interface listen before talk failure media access control control element is canceled if at least one of the following conditions is met:
a reconfiguration message for parameters related to sidelink interface listen before talk is received;
the sidelink interface listen before talk failure media access control control element is sent;
resource block set reselection is performed on the sidelink interface;
resource pool reselection is performed on the sidelink interface.

Step 53: the UE sends first indication information or a sidelink interface listen before talk failure media access control control element to the network device.

It should be noted that step 53 is an optional step, that is, this step is performed only when the UE is in an RRC connected state, the UE is in an RRC connected state and uses a terminal-selected resource allocation mode (mode 2), or the UE is in an RRC connected state and uses a network-scheduled resource allocation mode (mode 1).

When SL RLF is triggered, if the terminal is in an RRC connected state, the terminal is in an RRC connected state and the sidelink interface uses a terminal-selected resource allocation mode, or the terminal is in an RRC connected state and the sidelink interface uses a network-scheduled resource allocation mode, the terminal sends first indication information to the network device. The first indication information includes at least one of the following information:
a reason for the sidelink interface radio link failure;
a L2 destination address corresponding to the sidelink interface radio link failure;
a combination of a L2 source address and the L2 destination address corresponding to the sidelink interface radio link failure;
information about the resource pool experiencing the listen before talk failure (may include information about one or more resource pools);
information about the RB set experiencing the listen before talk failure (may include information about one or more RB sets).

If the terminal sends the sidelink interface listen before talk failure media access control control element to the network device, the sidelink interface listen before talk failure media access control control element includes at least one of the following:
information about the resource pool experiencing the consistent LBT failure (may include information about one or more resource pools);
information about the RB set experiencing the consistent LBT failure (may include information about one or more RB sets).

If the SL RLF is triggered in step 52, the terminal sends first indication information to the network device. The first indication information may be carried by an existing RRC message (e.g., a SidelinkUEInformation message) or by a newly introduced RRC message.

If the sidelink interface listen before talk failure media access control control element is triggered in step 52, the sidelink interface listen before talk failure media access control control element may be carried by a MAC PDU.

**It** should be noted that at least one embodiment of the present disclosure provides a method for processing a consistent LBT failure occurring on a sidelink interface RB set, which can ensure that the system can operate normally when the sidelink interface uses a shared spectrum.

The technical solutions provided by the embodiments of the present disclosure may be applied to a variety of systems, especially 5G systems. For example, applicable systems may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems all include terminals (also called terminal devices) and network devices. The system may also include core network parts, such as the Evolved Packet System (EPS), 5G System (5GS), etc.

The terminal involved in the embodiments of the present disclosure may also be referred to as a terminal device, which may be a device that provides voice and/or data connectivity to a user, a handheld device with a radio connection function, or other processing devices connected to a radio modem. In different systems, the name of the terminal device may also be different. For example, in the 5G system, the terminal device may be called User Equipment (UE). Radio terminal devices may communicate with one or more core networks (CN) via a radio access network (RAN). Radio terminal devices may be mobile terminal devices, such as mobile phones (or "cellular" phones) and computers with mobile terminal devices, for example, portable, pocket-sized, handheld, computer-built-in or vehicle-mounted mobile devices, which exchange language and/or data with the radio access network. For example, Personal Communication Service (PCS) phones, cordless phones, Session Initiated Protocol (SIP) phones, Wireless Local Loop (WLL) stations, Personal Digital Assistants (PDAs), and the like. The radio terminal device may also be referred to as a system, a subscriber unit, a subscriber station, a mobile station, a mobile, a remote station, an access point, a remote terminal device, an access terminal device, a user terminal device, a user agent, or a user device, but is not limited in the embodiments of the present disclosure.

The network device involved in the embodiments of the present disclosure may be a base station, which may include multiple cells providing services for terminals. Depending on the specific application scenario, a base station may also be called an access point, or may be a device in an access network that communicates with radio terminal devices through one or more sectors on the air interface, or other names. The network device may be used to convert received air frames into and out of Internet Protocol (IP) packets, acting as a router between the radio terminal device and the rest of the access network, which may include an Internet Protocol (IP) communication network. The network device also coordinates the management of attributes of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., but is not limited in the embodiments of the present disclosure. In some network structures, the network device may include centralized unit (CU) nodes and distributed unit (DU) nodes, and the centralized unit and the distributed unit may also be arranged geographically separately.

Network devices and terminal devices may each use one or more antennas for Multiple Input Multi Output (MIMO) transmission. MIMO transmission may be single user MIMO (SU-MIMO) or multiple user MIMO (MU-MIMO). Depending on the form and number of antenna combinations, MIMO transmission may be two-dimension MIMO (2D-MIMO), three-dimension MIMO (3D-MIMO), full-dimension MIMO (FD-MIMO), or massive MIMO, or may also be diversity transmission, precoding transmission, or beamforming transmission, etc.

As shown in FIG. 6, an embodiment of the present disclosure provides a device 600 for processing a consistent listen before talk failure, applied to a terminal, including:
a first performing unit 601, configured to perform a first operation when a first resource block set of a sidelink interface experiences the consistent listen before talk failure;
where the first operation includes at least one of the following:
   if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set;
   triggering resource pool reselection;
   triggering a sidelink interface listen before talk failure media access control control element;
   triggering a sidelink interface radio link failure.

In some embodiments, the selecting a second resource block set from the resource block sets that do not experience the consistent listen before talk failure includes:
if the number of the resource block sets in the first resource pool that do not experience the consistent listen before talk failure is greater than 1, selecting a resource block set from the resource block sets in the first resource pool that do not experience the consistent listen before talk failure as the second resource block set according to a first manner;
where the first manner includes one of the following:
   randomly selecting;
   selecting in an ascending or descending order according to a numbering order of the resource block sets;
   selecting in an ascending or descending order according to frequency domain positions and/or time domain positions of the resource block sets.

In some embodiments, when the first operation includes if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set, the device is further configured to:
when all resource block sets included in the first resource pool experience the consistent listen before talk failure or there is no resource block set in the first resource pool that does not experience the consistent listen before talk failure, perform at least one of the following:
triggering the resource pool reselection;
triggering the sidelink interface listen before talk failure media access control control element;
triggering the sidelink interface radio link failure.

In some embodiments, after triggering the resource pool reselection, the device further includes:
a selecting unit, configured to select a resource block set from a reselected resource pool to perform the listen before talk failure recovery.

In some embodiments, the device further comprises:
a second performing unit, configured to perform at least one of the following if all resource block sets in a resource pool available to the terminal experience the consistent listen before talk failure:
triggering the sidelink interface listen before talk failure media access control control element;
triggering the sidelink interface radio link failure.

In some embodiments, when triggering the sidelink interface radio link failure, the device further includes:
a sending unit, configured to send first indication information to a network device if the terminal is in a first state;
where the first state includes one of the following:
   a Radio Resource Control (RRC) connected state;
   the RRC connected state and the sidelink interface uses a terminal-selected resource allocation mode;
   the RRC connected state and the sidelink interface uses a network-scheduled resource allocation mode;
   the first indication information includes at least one of the following:
      a reason for the sidelink interface radio link failure;
      a L2 destination address corresponding to the sidelink interface radio link failure;
      a combination of a L2 source address and the L2 destination address corresponding to the sidelink interface radio link failure;
      a combination of the L2 source address, the L2 destination address, and a transmission mode corresponding to the sidelink interface radio link failure;
      information about the resource pool experiencing the listen before talk failure;
      information about the resource block set experiencing the listen before talk failure.

In some embodiments, the reason for the sidelink interface radio link failure includes: the sidelink interface experiences the consistent listen before talk failure.

In some embodiments, the sidelink interface listen before talk failure media access control control element includes at least one of the following:
information about the resource pool experiencing the consistent listen before talk failure;
information about the resource block set experiencing the consistent listen before talk failure.

In some embodiments, the device further comprises:
a third performing unit, configured to cancel the triggered sidelink interface listen before talk failure media access control control element when a first condition is met;
where the first condition includes at least one of the following:
   a reconfiguration message for parameters related to sidelink interface listen before talk is received;
   the sidelink interface listen before talk failure media access control control element is sent;
   resource block set reselection is performed on the sidelink interface;
   resource pool reselection is performed on the sidelink interface.

In some embodiments, the device further comprises:
a receiving unit, configured to receive configuration information;
determine, according to the configuration information, the first operation corresponding to the configuration information;
where the configuration information includes at least one of the following:
   dedicated signaling received from a network device, where the dedicated signaling includes: RRC signaling, media access control control element, or physical layer signaling;
   pre-configuration information;
   system information received from the network device.

In some embodiments, the device further comprises:
a reporting unit, configured to report capability information to a network device;
where the capability information includes at least one of the following:
   whether the terminal supports sidelink interface listen before talk failure recovery;
   an operation mode supported by the terminal when performing the listen before talk failure recovery on the sidelink interface.

In some embodiments, the device further comprises:
a determining unit, configured to determine the first operation according to configuration information;
where the configuration information is obtained in at least one of the following ways:
   obtained from system information received from a network device;
   obtained from radio resource control signaling received from the network device;
   obtained from a media access control control element received from the network device;
   obtained from physical layer signaling received from the network device;
   obtained from pre-configuration information;
   specified by a protocol.

It should be noted that the device embodiment is a device that corresponds one-to-one to the above-mentioned method embodiment. All implementations in the above-mentioned method embodiment are applicable to the device embodiment and can achieve the same technical effects.

It should be noted that the division of units in the embodiments of the present disclosure is schematic and is merely a logical function division. There may be other division methods in actual implementation. In addition, each functional unit in each embodiment of the present disclosure may be integrated into one processing unit, or each unit may exist physically separately, or two or more units may be integrated into one unit. The above-mentioned integrated units may be implemented in the form of hardware or in the form of software functional units.

If the integrated unit is implemented in the form of a software functional unit and sold or used as an independent product, it may be stored in a processor-readable storage medium. Based on this understanding, the technical solution of the present disclosure, or the part that contributes to the relevant technology, or all or part of the technical solution may be embodied in the form of a software product. The computer software product is stored in a storage medium and includes a number of instructions for enabling a computer device (which may be a personal computer, a server, or a network device, etc.) or a processor to execute all or part of the steps of the method described in each embodiment of the present disclosure. The aforementioned storage medium includes: U disk, mobile hard disk, read-only memory (ROM), random access memory (RAM), magnetic disk or optical disk, etc., which may store program codes.

As shown in FIG. 7, an embodiment of the present disclosure further provides a terminal, including a processor 700, a transceiver 710, a memory 720, and a program stored in the memory 720 and executable on the processor 700. The transceiver 710 is connected to the processor 700 and the memory 720 via a bus interface. The processor 700 is configured to read the program in the memory and perform the following process:
performing a first operation when a first resource block set of a sidelink interface experiences a consistent listen before talk failure;
where the first operation includes at least one of the following:
   if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set;
   triggering resource pool reselection;
   triggering a sidelink interface listen before talk failure media access control control element;
   triggering a sidelink interface radio link failure.

The transceiver 710 is configured to receive and transmit data under the control of the processor 700.

In FIG. 7, the bus architecture may include any number of interconnected buses and bridges, specifically linking various circuits of one or more processors represented by processor 700 and memory represented by memory 720 together. The bus architecture may also link together various other circuits such as peripheral devices, voltage regulators, and power management circuits, which are all well known in the art and, therefore, will not be described further herein. The bus interface provides an interface. The transceiver 710 may be a plurality of components, including a transmitter and a receiver, providing a unit for communicating with various other devices over a transmission medium, such as a wireless channel, a wired channel, an optical cable, or the like. For different user devices, the user interface 730 may also be an interface capable of connecting to external or internal devices as required, and the connected devices include but are not limited to a keypad, a display, a speaker, a microphone, a joystick, and the like.

The processor 700 is responsible for managing the bus architecture and general processing, and the memory 720 may store data used by the processor 700 when performing operations.

Optionally, the processor 700 may be a central processing unit (CPU), an application specific integrated circuit (ASIC), a field programmable gate array (FPGA) or a complex programmable logic device (CPLD), and the processor may also adopt a multi-core architecture.

The processor calls the computer program stored in the memory to perform any of the methods provided in the embodiments of the present disclosure according to the obtained executable instructions. The processor and memory may also be physically separated.

In some embodiments, the processor is configured to read the computer program in the memory and perform following operations:
if the number of the resource block sets in the first resource pool that do not experience the consistent listen before talk failure is greater than 1, selecting a resource block set from the resource block sets in the first resource pool that do not experience the consistent listen before talk failure as the second resource block set according to a first manner;
where the first manner includes one of the following:
   randomly selecting;
   selecting in an ascending or descending order according to a numbering order of the resource block sets;
   selecting in an ascending or descending order according to frequency domain positions and/or time domain positions of the resource block sets.

In some embodiments, when the first operation includes if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set, the processor is configured to read the computer program in the memory and further perform following operations:
when all resource block sets included in the first resource pool experience the consistent listen before talk failure or there is no resource block set in the first resource pool that does not experience the consistent listen before talk failure, performing at least one of the following:
triggering the resource pool reselection;
triggering the sidelink interface listen before talk failure media access control control element;
triggering the sidelink interface radio link failure.

In some embodiments, the processor is configured to read the computer program in the memory and further perform following operations:
selecting a resource block set from a reselected resource pool to perform the listen before talk failure recovery.

In some embodiments, the processor is configured to read the computer program in the memory and further perform following operations:
performing at least one of the following if all resource block sets in a resource pool available to the terminal experience the consistent listen before talk failure:
triggering the sidelink interface listen before talk failure media access control control element;
triggering the sidelink interface radio link failure.

In some embodiments, when triggering the sidelink interface radio link failure, the processor is configured to read the computer program in the memory and further perform following operations:
sending first indication information to a network device if the terminal is in a first state;
where the first state includes one of the following:
   a Radio Resource Control (RRC) connected state;
   the RRC connected state and the sidelink interface uses a terminal-selected resource allocation mode;
   the RRC connected state and the sidelink interface uses a network-scheduled resource allocation mode;
   the first indication information includes at least one of the following:
      a reason for the sidelink interface radio link failure;
      a L2 destination address corresponding to the sidelink interface radio link failure;
      a combination of a L2 source address and the L2 destination address corresponding to the sidelink interface radio link failure;
      a combination of the L2 source address, the L2 destination address, and a transmission mode corresponding to the sidelink interface radio link failure;
      information about the resource pool experiencing the listen before talk failure;
      information about the resource block set experiencing the listen before talk failure.

In some embodiments, the reason for the sidelink interface radio link failure includes: the sidelink interface experiences the consistent listen before talk failure.

In some embodiments, the sidelink interface listen before talk failure media access control control element includes at least one of the following:
information about the resource pool experiencing the consistent listen before talk failure;
information about the resource block set experiencing the consistent listen before talk failure.

In some embodiments, the processor is configured to read the computer program in the memory and further perform following operations:
canceling the triggered sidelink interface listen before talk failure media access control control element when a first condition is met;
where the first condition includes at least one of the following:
   a reconfiguration message for parameters related to sidelink interface listen before talk is received;
   the sidelink interface listen before talk failure media access control control element is sent;
   resource block set reselection is performed on the sidelink interface;
   resource pool reselection is performed on the sidelink interface.

In some embodiments, the processor is configured to read the computer program in the memory and further perform following operations:
receiving configuration information;
determining, according to the configuration information, the first operation corresponding to the configuration information;
where the configuration information includes at least one of the following:
   dedicated signaling received from a network device, where the dedicated signaling includes: RRC signaling, media access control control element, or physical layer signaling;
   pre-configuration information;
   system information received from the network device.

In some embodiments, the processor is configured to read the computer program in the memory and further perform following operations:
reporting capability information to a network device;
where the capability information includes at least one of the following:
   whether the terminal supports sidelink interface listen before talk failure recovery;
   an operation mode supported by the terminal when performing the listen before talk failure recovery on the sidelink interface.

In some embodiments, the processor is configured to read the computer program in the memory and further perform following operations:
determining the first operation according to configuration information;
where the configuration information is obtained in at least one of the following ways:
   obtained from system information received from a network device;
   obtained from radio resource control signaling received from the network device;
   obtained from a media access control control element received from the network device;
   obtained from physical layer signaling received from the network device;
   obtained from pre-configuration information;
   specified by a protocol.

It should be noted here that the above-mentioned terminal provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

An embodiment of the present disclosure further provides a computer-readable storage medium having a computer program stored thereon, where when the computer program is executed by a processor, the steps of a method for processing a consistent listen before talk failure applied to a terminal are implemented. The processor-readable storage medium may be any available medium or data storage device that may be accessed by the processor, including but not limited to magnetic storage (such as floppy disk, hard disk, magnetic tape, magneto-optical (MO), etc.), etc.), optical storage (such as compact disk (CD), digital video disc (DVD), Blu-ray disc (BD), high-definition versatile disc (HVD), etc.), and semiconductor memory (such as read-only memory (ROM), erasable programmable read-only memory (EPROM), electrically erasable programmable read-only memory (EEPROM), non-volatile memory (NAND FLASH), solid state disk (SSD)) etc.

Those skilled in the art should appreciate that the embodiments of the present disclosure may be provided as methods, systems, or computer program products. Accordingly, the present disclosure may take the form of an entirely hardware embodiment, an entirely software embodiment, or an embodiment combining software and hardware aspects. Furthermore, the present disclosure may take the form of a computer program product embodied on one or more computer-usable storage media (including but not limited to magnetic disk storage and optical storage, etc.) containing computer-usable program codes.

The present disclosure is described with reference to flowcharts and/or block diagrams of methods, devices (systems), and computer program products according to embodiments of the disclosure. It should be understood that each process and/or block in the flowcharts and/or block diagrams, and combinations of processes and/or blocks in the flowcharts and/or block diagrams, may be implemented by computer-executable instructions. These computer-executable instructions may be provided to a processor of a general-purpose computer, a special-purpose computer, an embedded processor, or other programmable data processing device to produce a machine, so that the instructions executed by the processor of the computer or other programmable data processing device produce a device for implementing the functions specified in one or more processes in the flowchart and/or one or more blocks in the block diagram.

These processor-executable instructions may also be stored in a processor-readable memory that may direct a computer or other programmable data processing device to operate in a specific manner, so that the instructions stored in the processor-readable memory produce a product including an instruction device that implements the functions specified in one or more processes in the flowchart and/or one or more blocks in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

It should be noted that it should be understood that the division of the above modules is merely a division of logical functions, and in actual implementation, they may be fully or partially integrated into one physical entity, or may be physically separated. These modules may all be implemented in the form of software called by processing elements; they may also all be implemented in the form of hardware; or some modules may be implemented in the form of software called by processing elements, and some modules may be implemented in the form of hardware. For example, a determining module may be a separately established processing element, or may be integrated into a chip of the above-mentioned device. In addition, it may also be stored in the memory of the above-mentioned device in the form of program code, and called by a processing element of the above-mentioned device to perform the functions of the above-mentioned determining module. The implementation of other modules is similar. In addition, all or part of these modules may be integrated together or implemented independently. The processing element mentioned here may be an integrated circuit having a signal processing capability. During implementation, each step of the above method or each module above may be completed by an integrated logic circuit of hardware in a processor element or by instructions in the form of software.

For example, each module, unit, sub-unit or sub-module may be one or more integrated circuits configured to implement the above method, such as: one or more application specific integrated circuits (ASICs), or, one or more microprocessors (digital signal processors, DSPs), or, one or more field programmable gate arrays (FPGAs), etc. For another example, when a certain module above is implemented in the form of a processing element scheduling a program code, the processing element may be a general-purpose processor, such as a central processing unit (CPU) or other processor that may call program codes. For another example, these modules may be integrated together and implemented in the form of a system-on-a-chip (SOC).

The terms "first", "second", and the like in the description and claims of the present disclosure are used to distinguish similar objects but not necessarily to describe a particular sequence or order. It is to be understood that the terms so used are interchangeable under appropriate circumstances such that the embodiments of the disclosure described herein may be practiced in sequences other than those illustrated or described herein. In addition, the terms "comprise" and "have" and any variations thereof are intended to cover a non-exclusive inclusion. For example, a process, method, system, product or device that includes a series of steps or elements is not necessarily limited to those steps or elements expressly listed but may include other steps or elements not expressly listed or inherent to such process, method, product or device. In addition, the use of "and/or" in the specification and claims indicates at least one of the connected objects, for example, A and/or B and/or C, indicating seven situations including A alone, B alone, C alone, both A and B exist, both B and C exist, both A and C exist, and A, B and C exist. Similarly, the use of "at least one of A and B" in this specification and claims should be understood as "A alone, B alone, or both A and B exist".

Obviously, those skilled in the art may make various changes and modifications to the present disclosure without departing from the spirit and scope of the present disclosure. Thus, if these changes and modifications of the present disclosure fall within the scope of the claims of the present disclosure and their equivalents, the present disclosure is intended to include these changes and modifications.

## Claims

1. A method for processing a consistent listen before talk failure, performed by a terminal, comprising:
performing a first operation when a first resource block set of a sidelink interface experiences the consistent listen before talk failure;
wherein the first operation comprises at least one of the following:
if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set;
triggering resource pool reselection;
triggering a sidelink interface listen before talk failure media access control control element;
triggering a sidelink interface radio link failure.

2. The method according to claim 1, wherein the selecting a second resource block set from the resource block sets that do not experience the consistent listen before talk failure comprises:
if the number of the resource block sets in the first resource pool that do not experience the consistent listen before talk failure is greater than 1, selecting a resource block set from the resource block sets in the first resource pool that do not experience the consistent listen before talk failure as the second resource block set according to a first manner;
wherein the first manner comprises one of the following:
randomly selecting;
selecting in an ascending or descending order according to a numbering order of the resource block sets;
selecting in an ascending or descending order according to frequency domain positions and/or time domain positions of the resource block sets.

3. The method according to claim 1, wherein, when the first operation comprises if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set, the method further comprises:
when all resource block sets included in the first resource pool experience the consistent listen before talk failure or there is no resource block set in the first resource pool that does not experience the consistent listen before talk failure, performing at least one of the following:
triggering the resource pool reselection;
triggering the sidelink interface listen before talk failure media access control control element;
triggering the sidelink interface radio link failure.

4. The method according to claim 1 or 3, wherein, after triggering the resource pool reselection, the method further comprises:
selecting a resource block set from a reselected resource pool to perform the listen before talk failure recovery.

5. The method according to claim 1, further comprising:
performing at least one of the following if all resource block sets in a resource pool available to the terminal experience the consistent listen before talk failure:
triggering the sidelink interface listen before talk failure media access control control element;
triggering the sidelink interface radio link failure.

6. The method according to claim 1, 3 or 5, wherein, when triggering the sidelink interface radio link failure, the method further comprises:
sending first indication information to a network device if the terminal is in a first state;
wherein the first state comprises one of the following:
a Radio Resource Control (RRC) connected state;
the RRC connected state and the sidelink interface uses a terminal-selected resource allocation mode;
the RRC connected state and the sidelink interface uses a network-scheduled resource allocation mode;
the first indication information comprises at least one of the following:
a reason for the sidelink interface radio link failure;
a L2 destination address corresponding to the sidelink interface radio link failure;
a combination of a L2 source address and the L2 destination address corresponding to the sidelink interface radio link failure;
a combination of the L2 source address, the L2 destination address, and a transmission mode corresponding to the sidelink interface radio link failure;
information about the resource pool experiencing the listen before talk failure;
information about the resource block set experiencing the listen before talk failure.

7. The method according to claim 6, wherein the reason for the sidelink interface radio link failure comprises: the sidelink interface experiences the consistent listen before talk failure.

8. The method according to claim 1, 3 or 5, wherein the sidelink interface listen before talk failure media access control control element comprises at least one of the following:
information about the resource pool experiencing the consistent listen before talk failure;
information about the resource block set experiencing the consistent listen before talk failure.

9. The method according to claim 1, 3 or 5, further comprising:
canceling the triggered sidelink interface listen before talk failure media access control control element when a first condition is met;
wherein the first condition comprises at least one of the following:
a reconfiguration message for parameters related to sidelink interface listen before talk is received;
the sidelink interface listen before talk failure media access control control element is sent;
resource block set reselection is performed on the sidelink interface;
resource pool reselection is performed on the sidelink interface.

10. The method according to claim 1, further comprising:
receiving configuration information;
determining, according to the configuration information, the first operation corresponding to the configuration information;
wherein the configuration information comprises at least one of the following:
dedicated signaling received from a network device, wherein the dedicated signaling comprises: RRC signaling, media access control control element, or physical layer signaling;
pre-configuration information;
system information received from the network device.

11. The method according to any one of claims 1 to 10, further comprising:
reporting capability information to a network device;
wherein the capability information comprises at least one of the following:
whether the terminal supports sidelink interface listen before talk failure recovery;
an operation mode supported by the terminal when performing the listen before talk failure recovery on the sidelink interface.

12. The method according to claim 1, further comprising:
determining the first operation according to configuration information;
wherein the configuration information is obtained in at least one of the following ways:
obtained from system information received from a network device;
obtained from radio resource control signaling received from the network device;
obtained from a media access control control element received from the network device;
obtained from physical layer signaling received from the network device;
obtained from pre-configuration information;
specified by a protocol.

13. A terminal, comprising: a memory, a transceiver, and a processor:
wherein the memory is configured to store a computer program; the transceiver is configured to transmit and receive data under the control of the processor; and the processor is configured to read the computer program in the memory and perform following operations:
performing a first operation when a first resource block set of a sidelink interface experiences a consistent listen before talk failure;
wherein the first operation comprises at least one of the following:
if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set;
triggering resource pool reselection;
triggering a sidelink interface listen before talk failure media access control control element;
triggering a sidelink interface radio link failure.

14. The terminal according to claim 13, wherein the processor is configured to read the computer program in the memory and perform following operations:
if the number of the resource block sets in the first resource pool that do not experience the consistent listen before talk failure is greater than 1, selecting a resource block set from the resource block sets in the first resource pool that do not experience the consistent listen before talk failure as the second resource block set according to a first manner;
wherein the first manner comprises one of the following:
randomly selecting;
selecting in an ascending or descending order according to a numbering order of the resource block sets;
selecting in an ascending or descending order according to frequency domain positions and/or time domain positions of the resource block sets.

15. The terminal according to claim 13, wherein, when the first operation comprises if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set, the processor is configured to read the computer program in the memory and further perform following operations:
when all resource block sets included in the first resource pool experience the consistent listen before talk failure or there is no resource block set in the first resource pool that does not experience the consistent listen before talk failure, performing at least one of the following:
triggering the resource pool reselection;
triggering the sidelink interface listen before talk failure media access control control element;
triggering the sidelink interface radio link failure.

16. The terminal according to claim 13 or 15, wherein the processor is configured to read the computer program in the memory and further perform following operations:
selecting a resource block set from a reselected resource pool to perform the listen before talk failure recovery.

17. The terminal according to claim 13, wherein the processor is configured to read the computer program in the memory and further perform following operations:
performing at least one of the following if all resource block sets in a resource pool available to the terminal experience the consistent listen before talk failure:
triggering the sidelink interface listen before talk failure media access control control element;
triggering the sidelink interface radio link failure.

18. The terminal according to claim 13, 15 or 17, wherein, when triggering the sidelink interface radio link failure, the processor is configured to read the computer program in the memory and further perform following operations:
sending first indication information to a network device if the terminal is in a first state;
wherein the first state comprises one of the following:
a Radio Resource Control (RRC) connected state;
the RRC connected state and the sidelink interface uses a terminal-selected resource allocation mode;
the RRC connected state and the sidelink interface uses a network-scheduled resource allocation mode;
the first indication information comprises at least one of the following:
a reason for the sidelink interface radio link failure;
a L2 destination address corresponding to the sidelink interface radio link failure;
a combination of a L2 source address and the L2 destination address corresponding to the sidelink interface radio link failure;
a combination of the L2 source address, the L2 destination address, and a transmission mode corresponding to the sidelink interface radio link failure;
information about the resource pool experiencing the listen before talk failure;
information about the resource block set experiencing the listen before talk failure.

19. The terminal according to claim 18, wherein the reason for the sidelink interface radio link failure comprises: the sidelink interface experiences the consistent listen before talk failure.

20. The terminal according to claim 13, 15 or 17, wherein the sidelink interface listen before talk failure media access control control element comprises at least one of the following:
information about the resource pool experiencing the consistent listen before talk failure;
information about the resource block set experiencing the consistent listen before talk failure.

21. The terminal according to claim 13, 15 or 17, wherein the processor is configured to read the computer program in the memory and further perform following operations:
canceling the triggered sidelink interface listen before talk failure media access control control element when a first condition is met;
wherein the first condition comprises at least one of the following:
a reconfiguration message for parameters related to sidelink interface listen before talk is received;
the sidelink interface listen before talk failure media access control control element is sent;
resource block set reselection is performed on the sidelink interface;
resource pool reselection is performed on the sidelink interface.

22. The terminal according to claim 13, wherein the processor is configured to read the computer program in the memory and further perform following operations:
receiving configuration information;
determining, according to the configuration information, the first operation corresponding to the configuration information;
wherein the configuration information comprises at least one of the following:
dedicated signaling received from a network device, wherein the dedicated signaling comprises: RRC signaling, media access control control element, or physical layer signaling;
pre-configuration information;
system information received from the network device.

23. The terminal according to any one of claims 13 to 22, wherein the processor is configured to read the computer program in the memory and further perform following operations:
reporting capability information to a network device;
wherein the capability information comprises at least one of the following:
whether the terminal supports sidelink interface listen before talk failure recovery;
an operation mode supported by the terminal when performing the listen before talk failure recovery on the sidelink interface.

24. The terminal according to claim 13, wherein the processor is configured to read the computer program in the memory and further perform following operations:
determining the first operation according to configuration information;
wherein the configuration information is obtained in at least one of the following ways:
obtained from system information received from a network device;
obtained from radio resource control signaling received from the network device;
obtained from a media access control control element received from the network device;
obtained from physical layer signaling received from the network device;
obtained from pre-configuration information;
specified by a protocol.

25. A device for processing a consistent listen before talk failure, applied to a terminal, comprising:
a first performing unit, configured to perform a first operation when a first resource block set of a sidelink interface experiences the consistent listen before talk failure;
wherein the first operation comprises at least one of the following:
if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set;
triggering resource pool reselection;
triggering a sidelink interface listen before talk failure media access control control element;
triggering a sidelink interface radio link failure.

26. The device according to claim 25, wherein the selecting a second resource block set from the resource block sets that do not experience the consistent listen before talk failure comprises:
if the number of the resource block sets in the first resource pool that do not experience the consistent listen before talk failure is greater than 1, selecting a resource block set from the resource block sets in the first resource pool that do not experience the consistent listen before talk failure as the second resource block set according to a first manner;
wherein the first manner comprises one of the following:
randomly selecting;
selecting in an ascending or descending order according to a numbering order of the resource block sets;
selecting in an ascending or descending order according to frequency domain positions and/or time domain positions of the resource block sets.

27. The device according to claim 25, wherein, when the first operation comprises if there are resource block sets in a first resource pool to which the first resource block set belongs that do not experience the consistent listen before talk failure, selecting a second resource block set from the resource block sets that do not experience the consistent listen before talk failure, and performing listen before talk failure recovery on the second resource block set, the device is further configured to:
when all resource block sets included in the first resource pool experience the consistent listen before talk failure or there is no resource block set in the first resource pool that does not experience the consistent listen before talk failure, perform at least one of the following:
triggering the resource pool reselection;
triggering the sidelink interface listen before talk failure media access control control element;
triggering the sidelink interface radio link failure.

28. The device according to claim 25 or 27, wherein, after triggering the resource pool reselection, the device further comprises:
a selecting unit, configured to select a resource block set from a reselected resource pool to perform the listen before talk failure recovery.

29. The device according to claim 25, further comprising:
a second performing unit, configured to perform at least one of the following if all resource block sets in a resource pool available to the terminal experience the consistent listen before talk failure:
triggering the sidelink interface listen before talk failure media access control control element;
triggering the sidelink interface radio link failure.

30. The device according to claim 25, 27 or 29, wherein, when triggering the sidelink interface radio link failure, the device further comprises:
a sending unit, configured to send first indication information to a network device if the terminal is in a first state;
wherein the first state comprises one of the following:
a Radio Resource Control (RRC) connected state;
the RRC connected state and the sidelink interface uses a terminal-selected resource allocation mode;
the RRC connected state and the sidelink interface uses a network-scheduled resource allocation mode;
the first indication information comprises at least one of the following:
a reason for the sidelink interface radio link failure;
a L2 destination address corresponding to the sidelink interface radio link failure;
a combination of a L2 source address and the L2 destination address corresponding to the sidelink interface radio link failure;
a combination of the L2 source address, the L2 destination address, and a transmission mode corresponding to the sidelink interface radio link failure;
information about the resource pool experiencing the listen before talk failure;
information about the resource block set experiencing the listen before talk failure.

31. The device according to claim 30, wherein the reason for the sidelink interface radio link failure comprises: the sidelink interface experiences the consistent listen before talk failure.

32. The device according to claim 25, 27 or 29, wherein the sidelink interface listen before talk failure media access control control element comprises at least one of the following:
information about the resource pool experiencing the consistent listen before talk failure;
information about the resource block set experiencing the consistent listen before talk failure.

33. The device according to claim 25, 27 or 29, further comprising:
a third performing unit, configured to cancel the triggered sidelink interface listen before talk failure media access control control element when a first condition is met;
wherein the first condition comprises at least one of the following:
a reconfiguration message for parameters related to sidelink interface listen before talk is received;
the sidelink interface listen before talk failure media access control control element is sent;
resource block set reselection is performed on the sidelink interface;
resource pool reselection is performed on the sidelink interface.

34. The device according to claim 25, further comprising:
a receiving unit, configured to receive configuration information;
determine, according to the configuration information, the first operation corresponding to the configuration information;
wherein the configuration information comprises at least one of the following:
dedicated signaling received from a network device, wherein the dedicated signaling comprises: RRC signaling, media access control control element, or physical layer signaling;
pre-configuration information;
system information received from the network device.

35. The device according to claims 25 to 34, further comprising:
a reporting unit, configured to report capability information to a network device;
wherein the capability information comprises at least one of the following:
whether the terminal supports sidelink interface listen before talk failure recovery;
an operation mode supported by the terminal when performing the listen before talk failure recovery on the sidelink interface.

36. The device according to claim 25, further comprising:
a determining unit, configured to determine the first operation according to configuration information;
wherein the configuration information is obtained in at least one of the following ways:
obtained from system information received from a network device;
obtained from radio resource control signaling received from the network device;
obtained from a media access control control element received from the network device;
obtained from physical layer signaling received from the network device;
obtained from pre-configuration information;
specified by a protocol.

37. A processor-readable storage medium, storing a computer program, wherein the computer program is configured to cause a processor to execute the method according to any one of claims 1 to 12.
